Europäisches Patentamt

European Patent Office

Office européen des brevets

(11) Veröffentlichungsnummer: **0 047 386**
**B1**

(12) **EUROPÄISCHE PATENTSCHRIFT**

(45) Veröffentlichungstag der Patentschrift:
03.07.85

(21) Anmeldenummer: 81105876.7

(22) Anmeldetag: 24.07.81

(51) Int. Cl.⁴: **G 11 B 5/02**

(54) Verfahren zum Beseitigen von akustischen Störsignalen.

(30) Priorität: 25.07.80 DE 3028334

(43) Veröffentlichungstag der Anmeldung:
17.03.82 Patentblatt 82/11

(45) Bekanntmachung des Hinweises auf die Patenterteilung:
03.07.85 Patentblatt 85/27

(84) Benannte Vertragsstaaten:
AT BE CH FR GB IT LI LU NL SE

(56) Entgegenhaltungen:
EP - A - 0 044 963
DE - A - 2 533 190
DE - A - 2 628 472
DE - A - 2 828 414
DE - B - 2 541 671

(73) Patentinhaber: **POLYGRAM GmbH, Harvestehuder Weg 1-4, D-2000 Hamburg 13 (DE)**

(72) Erfinder: **Blüthgen, Björn, Gudehusweg 4, D-3100 Celle (DE)**

(74) Vertreter: **Mehl, Ernst, Dipl.-Ing., Postfach 22 01 76, D-8000 München 22 (DE)**

**Beschreibung**

Die Erfindung bezieht sich auf ein Verfahren zum Beseitigen bzw. Unterdrücken von akustischen Störsignalen bei für den Wiedergabevorgang aufzubereitenden Audioprogrammen, wie sie durch programmbezogene Pegelsprünge zwischen Signalausfällen, abrupte Übergänge, insbesondere von und zu Signalpausen, unerwünschte Signalfrequenzen und zu verbindende Schnittstellen zweier Programmabschnitte in Erscheinung treten, bei der die aufeinanderfolgenden Abtastwerte des aufzubereitenden Audiosignals einen Durchlaufspeicher durchlaufen, in dem durch einen Fehlerdetektor erkannte oder vorgegebene gestörte Programmabschnitte durch neue Abtastwerte entsprechend einer geeigneten Übergangsfunktion ersetzt werden.

Um akustisch störende Knackgeräusche bei der Aufbereitung von Audioprogrammen zu beseitigen, sind mehrere Möglichkeiten denkbar. Beispielsweise kann bei kurzzeitigen Signalausfällen daran gedacht werden, aus den Ausfallendwerten Zwischenwerte zu interpolieren, die dann in die Signallücke eingesetzt werden. Ein solches Verfahren ist in der älteren europäischen Patentanmeldung 81 105 126.7 angegeben. Ein solches Verfahren gibt allerdings nur dann brauchbare Ergebnisse, wenn die Pegel- und Zeitdifferenzen zwischen den Ausfallendwerten nicht allzu gross sind.

Weiterhin kann daran gedacht werden, eine Kurzzeitunterbrechung mit einem vorangehenden fehlerfreien Signalteil aufzufüllen, oder dieses vorhergehende Signalteil so zu dehnen, dass hiermit die Störstelle überbrückt wird.

Auch dies bringt Schwierigkeiten mit sich, wenn der Störabschnitt eine relativ grosse Länge aufweist und die Pegeldifferenz zwischen den Ausfallenden relativ gross ist.

Die genannten Möglichkeiten eignen sich daher nur zum Beseitigen von akustischen Knackgeräuschen bei kurzzeitigen Signalausfällen oder kurzzeitig auftretenden Störspitzen. Sie eignen sich dagegen weniger zum störfreien Verbinden zweier Programmabschnitte oder für Störungen, die durch abrupte Übergänge von und zum Signalpegel Null verursacht sind.

Der Erfindung liegt die Aufgabe zugrunde, für das Beseitigen bzw. Unterdrücken von akustischen Störsignalen, wie sie durch programmbezogene Pegelsprünge zwischen Signalausfällen, abrupte Übergänge, unerwünschte Signalfrequenzen und zu verbindenden Schnittstellen auftreten, ein Verfahren anzugeben, das allgemein anwendbar ist, und zwar bei hohen Anforderungen an die Störbefreiung des Audiosignals und darüber hinaus seinen Einsatz auch unabhängig davon ermöglicht, ob es sich bei dem aufzubereitenden Audioprogramm um einen kontrollierten, automatischen Aus- bzw. Einblendvorgang auf den – bzw. vom Pegelwert Null bzw. um analoge oder digitale Signale handelt.

Diese Aufgabe wird für ein Verfahren der einleitend genannten Art gemäss der Erfindung dadurch gelöst, dass ein erkannter oder vorgegebener gestörter Programmabschnitt durch einen ihm unmittelbar vorausgehenden und einen ihm unmittelbar nachfolgenden Signalwert eingegrenzt wird, der jeweils durch einen Vorzeichenwechsel der zeitlichen Änderung des aufzubereitenden Audiosignals (Signaländerungs-Polaritätswechsel) bestimmt wird und die so festgelegten gestörten Programmintervalle von angepassten Übergangssignalen mit weichen Übergängen an beiden Enden ersetzt werden und dass für die Generierung der diese Übergangssignale realisierenden neuen Abtastwerte von einem eine geeignete Übergangsfunktion in Gestalt von Abtastwerten enthaltenden adressierbaren Festwertspeicher Gebrauch gemacht wird, aus dem die jeweils erforderliche Anzahl von gleichmässig über den Verlauf der Übergangsfunktion verteilten Abtastwerten ausgelesen, entsprechend einem durch die maximale Signaländerung in ihrem Wert verringert und/oder vergrössert, in eine von der Signaländerungsrichtung abhängige Reihenfolge gebracht und in die Störsignalabschnitte anstelle der gestörten Abtastwerte eingefügt werden.

Bei der Erfindung wird von der Erkenntnis ausgegangen, dass eine wie immer geartete kurzzeitige akustisch wahrnehmbare Störung eines Audiosignals dadurch beseitigt werden kann, dass die Störfunktion selbst durch eine geeignete Übergangsfunktion ersetzt wird, die hierbei an das ungestörte Signal im Bereich zwischen störungsfrei erkannten Signalaugenblickswerten mit Signaländerungs-Polaritätswechsel, angepasst ist.

In einer zweckmässigen Ausgestaltung der Erfindung ist deshalb diese Übergangsfunktion in vorteilhafter Weise ein Halbsinus, deren Anzahl gespeicherter Abtastwerte gleich der um einen Wert verringerten Zahl der maximal vorhandenen bzw. zu fordernden Quantisierungsstufen des aufzubereitenden Audiosignals ist. Auf diese Weise wird gewährleistet, dass mittels dieser Übergangsfunktion auch maximale Pegelsprünge von der maximalen positiven Amplitude zur maximalen negativen Amplitude des Signals noch einwandfrei überbrückt werden können.

In Weiterbildung der Erfindung eignet sich dieses Verfahren auch in hervorragender Weise zur Unterdrückung von Krach- bzw. Zischgeräuschen bei grosser Zeitausdehnung eines aufzubereitenden an sich ungestörten analogen oder digitalen Audiosignals, beispielsweise bei der manuellen Suche geeigneter Schnittstellen, in der Weise, dass jedes zeitgedehnte Intervall zwischen zwei aufeinanderfolgenden Signalabtastwerten (Zeitlupenabtastintervall) durch im Rhythmus der normalen Abtastfrequenz aufeinanderfolgende Abtastwerte der Übergangsfunktion aufgefüllt werden. Ebenfalls können über freiwählbare $\Delta U$- und $\Delta t$-Referenzwerte gesteuert unerwünschte Signalfolgen aus einem Audioprogramm ausgefiltert werden.

Weitere vorteilhafte Ausgestaltungen des Verfahrens nach der Erfindung sind in den Ansprüchen 4 bis 7 angegeben.

Anhand von in der Zeichnung dargestellten Ausführungsbeispielen soll die Erfindung im folgenden noch näher erläutert werden.

In der Zeichnung bedeuten

Fig. 1 mehrere, die Wirkungsweise des Verfahrens nach der Erfindung näher erläuternde Zeitdiagramme,

Fig. 2 die Wirkungsweise des Verfahrens nach der Erfindung in seiner Anwendung auf zeitgedehnte Signale näher erläuternde Zeitdiagramme,

Fig. 3 das Blockschaltbild einer Studioeinrichtung mit einem vom Verfahren nach der Erfindung Gebrauch machenden Signalkorrektor,

Fig. 4 ein nähere Einzelheiten aufweisendes Blockschaltbild eines Signalkorrektors nach Fig. 3,

Fig. 5 ein die Arbeitsweise des Festwertspeichers im Blockschaltbild nach Fig. 4 näher erläuterndes Diagramm.

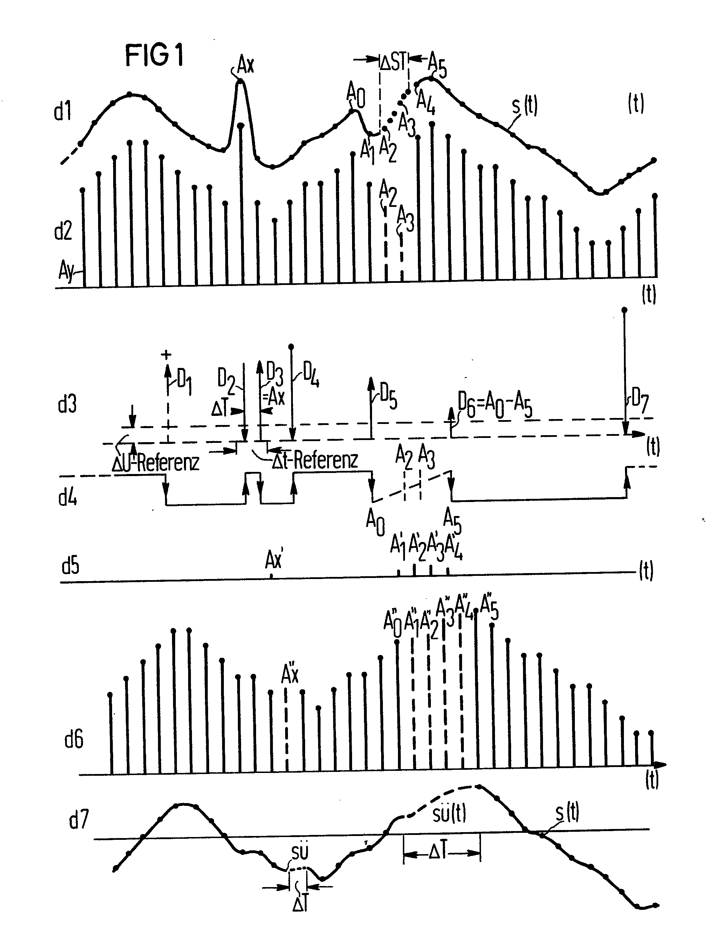

In Fig. 1 sind 7 Zeitdiagramme d1, d2 ... d7 untereinander aufgetragen, die die einzelnen Verfahrensschritte bei der Eliminierung von akustisch störenden Knackgeräuschen bei der Aufbereitung von Audiodiagrammen zeigen. Das Diagramm d1 zeigt über der Zeit ein analoges Audiosignal s(t), das zwei Störstellen, nämlich eine Störstelle der Breite $\Delta$ST und eine Störpegelspitze Ax aufweist. Die Störstelle ist hier als eine kurzzeitige Signalunterbrechung dargestellt. Diese Störstelle könnte auch den Ort einer ursprünglichen Störspitze darstellen, die zunächst in einem Fehlerdetektor, den das Signal durchlaufen hat, unterdrückt worden ist. Die Störstelle von der Zeitbreite $\Delta$ST für die im Beispiel gezeigte Dauer von zwei Abtastwerten A2 und A3 soll nun gemäss der Erfindung von einer weichen Übergangsfunktion überbrückt werden. Das Ausfiltern der Störpegelspitze Ax erfolgt sinngemäss in gleicher Weise.

Das im Diagramm d1 dargestellte Audiosignal s(t) kann in der angegebenen Form auf einem Magnetband in analoger oder aber auch in einer digitalen Form gespeichert sein. Zur Überbrükkung der Störstelle bzw. der Störpegelspitze werden nun beim analogen Signal im Rhythmus einer Abtastfrequenz Abtastwerte gebildet, wie sie im Diagramm d2 dargestellt sind. Aus diesen Abtastwerten Av werden, wie das Diagramm d3 zeigt, anschliessend Differenzwerte D1–D7 aus Polaritätswechsel bezogenen Scheitelwerten gebildet und im Diagramm d4 der Polaritätswechsel in der Folge dieser Differenzwerte ermittelt.

Ebenfalls zeigt Diagramm d3 Schwellwerte $\Delta$U-Referenz und $\Delta$t-Referenz als Bezugsgrössen für vorgegebene und somit auszufilternde Störspitzen im Audiosignal. Werden, wie in Diagramm d1 gezeigt, gestörte Abtastwerte A2 und A3 zwischen störsignalfreien Signaländerungs-Polaritätswechseln A0/A1 und A4/A5 erkannt, so werden die Abtastwerte A1 bis A4 nach Diagramm d1 durch solche einer weichen Übergangsfunktion ersetzt, nachdem zunächst noch aus den ungestörten Abtastwerten A0 und A5 der Differenzwert D6 = A0–A5 entsprechend Diagramm d3 gebildet wird, aus dessen durch Pfeilrichtung gekennzeichnetem Vorzeichen und Betrag die Richtungsänderung und die Gesamtänderung der die Störstelle überbrückenden Übergangsfunktion ermittelt wird. Die Bezugsabtastwerte für die vorgegebene Störpegelspitze Ax sind im gezeigten Beispiel der jeweils unmittelbar vor- bzw. nachfolgende Abtastwert von Ax.

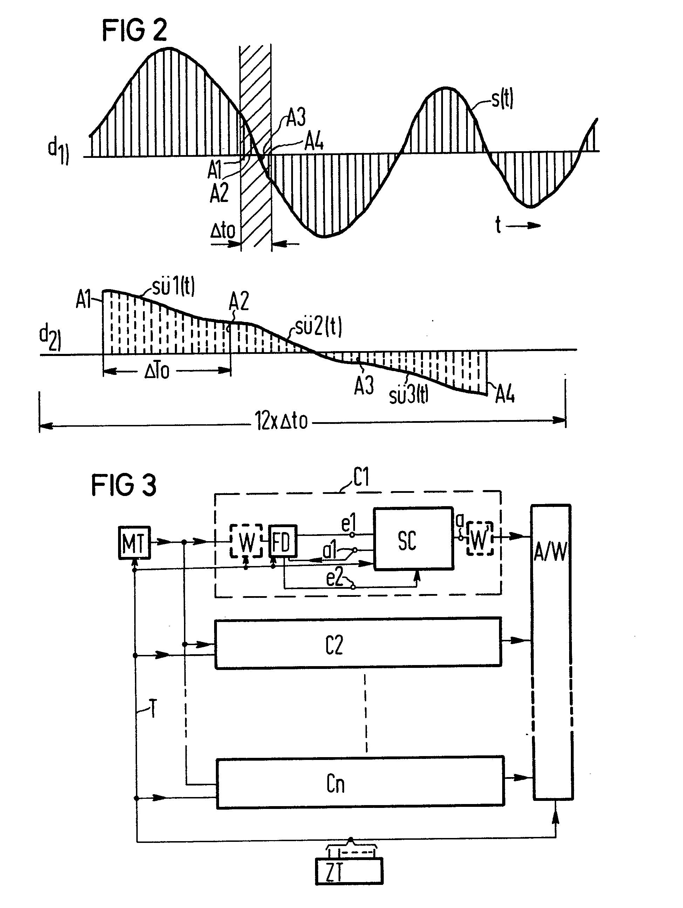

Die in einem Festwertspeicher gespeicherten digitalen Abtastwerte der einen Halbsinus darstellenden Übergangsfunktion werden nunmehr in der erforderlichen Anzahl – im vorliegenden Beispiel vier – in gleichmässig verteiltem Abstand über die Halbsinusfunktion hinweg aus dem Festwertspeicher ausgelesen und unter Berücksichtigung des Differenzwertes D6 nach Diagramm d5 in die Abtastdifferenzwerte A1', A2', A3' und A4' modifiziert. Durch Summenbildung dieser Abtastdifferenzwertfolge A1', A2', A3' und A4', ausgehend vom Abtastwert A0 werden die Abtastwerte A1", A2", A3" und A4" erhalten, die dann anstelle der gestörten Abtastwerte A1, A2, A3 und A4 nach Fig. 2 entsprechend dem Diagramm d6 in die Abtastfolge eingefügt werden.

Das durch die Abtastfolge im Diagramm d6 repräsentierte analoge Audiosignal s(t)' ist in d7 dargestellt, in dem die Übergangsfunktion sü(t) in Form des Halbsinus in unterbrochener Linie hervorgehoben ist.

Die durch den Abtastwert Ax gegebene Störung nach Diagramm d1 wird dadurch als Störpegelspitze erkannt, dass das betreffende Intervall des Signaländerungs-Polaritätswechsels von der Zeitbreite $\Delta$T kleiner als die $\Delta$t-Referenz ist. Der hier aus dem Festwertspeicher ausgelesene Abtastdifferenzwert ist im Diagramm d5 mit Ax' bezeichnet. Mittels der bereits geschilderten Summenbildung wird dann der im Diagramm d6 bezeichnete Abtastwert Ax" erhalten. Die zugehörige Übergangsfunktion sü im Diagramm d7, entartet hier praktisch in einen Übergangswertabschnitt.

Liegt das aufzubereitende Audiosignal in Form eines digitalen Signals vor, so können anstelle der Abtastwerte Av nach dem Diagramm d3 und die nachfolgende Differenzbildung dieser Abtastwerte auch unmittelbar in der digitalen Ebene, also durch die Differenzbildung der im Signal aufeinanderfolgenden, die Abtastwerte darstellenden Codeworte vorgenommen werden. In gleicher Weise können dann auch die Abtastdifferenzwerte A1', A2', A3' und A4' nach dem Diagramm d5 bzw. die Abtastwerte A1", A2", A3" und A4" nach dem Diagramm d6 als Differenzcodeworte bzw. Codeworte unmittelbar generiert werden.

Das gleiche Verfahren lässt sich auch bei abrupten Übergängen von und zu Signalpausen anwenden. Auch hier wird der dadurch akustisch hörbare und störende Knack durch Abtastfolgendifferenzwerte nach einem Polaritätswechsel angezeigt, die den gerade noch zu tolerierenden Schwellwert $\pm$ U für einen als Signalpause definierte $\geq$ der $\Delta$t-Referenz unterschreitet. Der Fehlerdetektor erkennt die Signalpause und zeigt damit an, dass der jeweilige Differenzwert nach Vorzeichen und Betrag gleich dem den fehlerhaften Übergang anzeigenden Differenzwert ist. Damit lassen sich dann Übergangsfunktions-Abtastwerte für Signalpausenübergänge bis zur Dauer eines Halbsinus für die untere System-Grenzfrequenz generieren.

Die Zeitdiagramme in Fig. 2 zeigen eine Weiterbildung des Verfahrens nach der Erfindung in seiner Anwendung auf stark zeitgedehnte Signale, wie sie zur manuellen Schnittstellenfindung, beispielsweise bei der Anpassung zweier Programmabschnitte aneinander verwendet werden kann. Liegt das Audiosignal in Form von Abtastwerten vor, wie das insbesondere bei digitalen Audiosignalen der Fall ist, dann treten wegen der abrupten Übergänge zwischen zwei aufeinanderfolgenden Abtastwerten akustisch störende Geräusche auf. Solche Geräusche können ebenfalls durch eine weiche Übergangsfunktion zwischen zwei aufeinanderfolgenden Abtastwerten unterbunden werden, wobei zur Gewinnung dieser Übergangsfunktion auf die gleiche Weise vorgegangen wird, wie das anhand der Zeitdiagramme nach Fig. 1 bereits erläutert worden ist. Hier wird anstelle der Übergangsfunktion zwischen den eine Störstelle umgebenden Abtastwerten mit Signaländerungs-Polaritätswechselzuordnung nunmehr der Zwischenraum zwischen zwei aufeinanderfolgenden als Abtastwerte erkannten Signalpegelwerten mit den im Festwertspeicher enthaltenen Abtastwerten des Halbsinus in Form von Zwischenwerten aufgefüllt.

Das Zeitdiagramm d1 nach Fig. 2 zeigt zunächst wiederum ein analoges Audiosignal s(t), das im Bereich seiner Abtastwerte A1, A2, A3 und A4, und zwar im Zeitlupenintervall $\Delta$to, für eine manuell einstellbare Schnittstellenbestimmung in der Zeit stark gedehnt werden soll. Nur beispielsweise ist im Diagramm d2 eine Zeitdehnung 12 · $\Delta$to dargestellt. Die Zeitlupenabtastintervalle $\Delta$To zwischen den Abtastwerten A1 und A2 bzw. A2 und A3 bzw. A3 und A4 werden nunmehr durch die Übergangsfunktionen sü1(t), sü2(t) und sü3(t) überbrückt, die durch in unterbrochenen Linien angedeutete Abtastwerte gebildet sind. Die Abtastfrequenz der Abtastwerte dieser Übergangsfunktionen ist gleich der Abtastfrequenz der Abtastwerte des Audiosignals s(t) nach dem Diagramm d1. Auf diese Weise wird also in ausserordentlich vorteilhafter Weise erreicht, dass auch bei sehr grossen Zeitdehnungen und damit möglichen sehr langsamen Übergängen von einem Abtastwert zum nächsten keine störenden akustischen Nebengeräusche auftreten und somit die gewünschte Schnittstelle allein durch Abhören des Signals bei sehr kleiner Bandgeschwindigkeit fehlerfrei ermittelt werden kann.

Die in Fig. 3 im Blockschaltbild schematisch dargestellte Studioeinrichtung zur Aufbereitung von Audioprogrammen besteht auf der Geberseite aus einem n Signalspuren aufweisenden Magnettonbandgerät MT. Die in den einzelnen Spuren aufgezeichneten Audiosignale werden getrennt n Kanalschaltungen C1, C2,...Cn zugeführt. Ausgangsseitig sind die Kanalschaltungen C1, C2,...Cn mit einem Aufnahme-Wiedergabegerät A/W verbunden, in dem die Signale weiter verarbeitet werden können. Das Magnettonbandgerät MT, die Kanalschaltungen C1, C2,...Cn und das Aufnahme-Wiedergabegerät A/W werden über die zentrale Taktversorgung ZT mit dem in der Regel aus verschiedenen Pulsfolgen bestehenden Takt T versorgt. Wie die Kanalschaltung C1, die näher ausgeführt ist, zeigt, besteht jede Kanalschaltung eingangsseitig aus einem Fehlerdetektor FD, dem gegebenenfalls ein Wandler W vorgeschaltet sein kann. Der Fehlerdetektor FD ist mit seinen zwei Ausgängen und seinem weiteren Eingang mit den beiden Eingängen e1 und e2 und dem Ausgang a1 des Signalkorrektors SC verbunden, dessen weiterer Ausgang a wiederum gegebenenfalls über einen weiteren Wandler W' mit dem zugehörigen Eingang des Aufnahme-Wiedergabegerätes A/W in Verbindung steht. Die Wandler W und W' sind dann erforderlich, wenn die Aufzeichnung der Audiosignale auf den n Spuren des Magnettonbandgerätes MT analog vorgenommen ist. Bei digitaler Aufzeichnung in Form von die Abtastwerte des ursprünglich analogen Audiosignals darstellenden PCM-Codeworten sind die Wandler nicht erforderlich, da die fehlerkorrigierende Aufbereitung eines Audiosignals im Signalkorrektor SC unmittelbar in der digitalen Ebene durchgeführt werden kann.

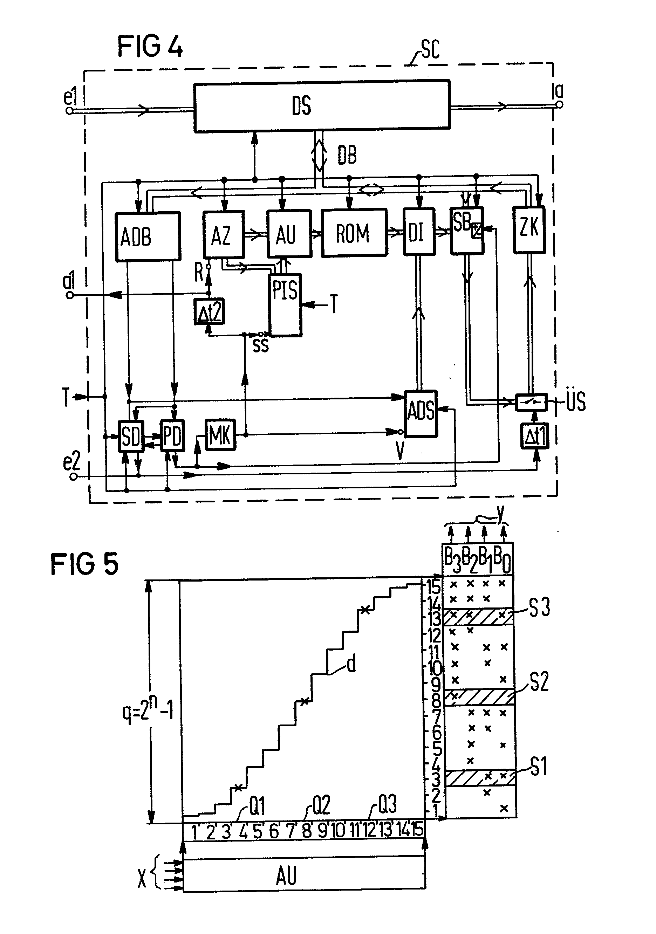

Wie das nähere Einzelheiten aufweisende Blockschaltbild des Signalkorrektors SC nach Fig. 4 zeigt, weist der Signalkorrektor zwischen seinem Eingang e1 und seinem Ausgang a einen Durchlaufspeicher DS auf, der es gestattet, einen gestörten Signalabschnitt einschliesslich der die Störstelle zwischen zwei Signalfluss-Polaritätswechseln umgebenden ungestörten Abtastwerte während seines Durchlaufs in der im Zusammenhang mit den Figuren 1 und 2 beschriebenen Weise durch eine Übergangsfunktion miteinander zu verbinden.

Der Durchlaufspeicher DS ist über einen Datenbus DB mit mehreren Einrichtungen, und zwar dem Abtastwertdifferenzbildner ADB dem Summenbildner SB und dem Zeitkorrektor ZK verbunden. Zunächst werden aus den einlaufenden Abtastwerten des Audiosignals auf der Eingangsseite des Durchlaufspeichers DS fortlaufend Differenzwerte Dv aus den Abtastwerten Av entsprechend dem Diagramm d2 nach Fig. 1 gebildet und diese einerseits zur Bewertung dem Schwellwertdetektor SD entsprechend dem Diagramm d3 nach Fig. 1 und andererseits zur Feststellung eines Polaritätswechsels dem Polaritätsdetektor PD zugeführt. Der Polaritätsdetektor PD erzeugt entweder in Abhängigkeit vom Schwellendetektor SD gemeldeten Schwellenüberschreitungen bzw. aus den abgetasteten Signalflusswechsel-Scheitelwerten mit dazwischen ermittelten Störstellen Differenzwerte und bei Auftreten eines Polaritätswechsels ein Ausgangssignal, das einerseits die Polarität dieser Differenzwerte an den Polaritätseingang des Summenbildners SB weitergibt und andererseits jeweils eine monostabile Kippschaltung MK von ihrem Ruhe- in ihren Arbeitszustand bringt.

Der ausgangsseitige Impuls der monostabilen Kippstufe MK dient der Aktivierung des Abtastwertdifferenzspeichers ADS und des Signaländerungs-Polaritätswechselintervallspeichers PIS. Auf diese Weise werden die durch Polaritätswechsel markierten, für die Anwendung als vorgegebenes Störpegelspitzenfilter die Schwelle des Schwellwertdetektors SD überschreitenden Abtastdifferenzwerte am Ausgang des Abtastdifferenzwertbildners ADB, der mit dem Eingang des Abtastwertdifferenzspeichers ADS verbunden ist, in den Abtastwertdifferenzspeicher eingeschrieben und hieraus Differenzwerte D1–D7 nach Diagramm d3 der Fig. 1 gebildet. Die so gewonnenen Differenzwerte werden dem einen Eingang des Dividierers DI zugeführt, dessen zweiter Eingang mit dem Ausgang des die Übergangsfunktion in Form von Abtastwerten in sich enthaltenden adressierbaren Festwertspeicher verbunden ist.

Der Signaländerungs-Polaritätswechsel-Intervallspeicher PIS speichert mit einem Schreibimpuls ss vom Ausgang der monostabilen Kippstufe MK den jeweils letzten Zählerstand des Abtastfrequenzzählers AZ vor dessen Rücksetzung über den Eingang R. Gleichzeitig wird der Impuls am Ausgang der monostabilen Kippstufe MK dazu benutzt, um den Abtastfrequenzzähler AZ nach einer ausreichend grossen Zeit über den Rückstelleingang R wieder in seiner Ausgangsposition zu bringen. Hierzu wird der Ausgangsimpuls der monostabilen Kippschaltung MK über das Zeitverzögerungsglied $\Delta t2$ geführt.

Über den Ausgang des Polaritätsdetektors PD, den Ausgang des Signaländerungs-Polaritätswechselintervallspeichers PIS, den Ausgang des Abtastwertdifferenzspeichers ADS mit dem Polaritätssignal am Polaritätseingang des Summenbildners SB stehen damit die Variablen zur Verfügung, die für die Generierung der Abtastwerte A1'', A2'', A3'' und A4'' entsprechend dem Diagramm d6 nach Fig. 1 aus den im Festwertspeicher ROM gespeicherten Abtastwerten der Übergangsfunktion in Form eines Halbsinus zur Überbrückung gestörter oder unerwünschter Programmabschnitte erforderlich sind.

Das Ausgangssignal des Signaländerungs-Polaritätswechselintervallspeichers PIS steuert mit dem Ausgangssignal des Abtastfrequenzzählers AZ die Umcodierung der benötigten Abtastwerteanzahl in einem Adressenumwerter AU. Der Abtastfrequenzzähler AZ wird über seinen Rückstelleingang R vom ausgangsseitigen Impuls des Zeitverzögerungsgliedes $\Delta t2$ ebenfalls rückgesetzt. Zugleich geht dieser Impuls über den Ausgang a1 an den Fehlerdetektor FD, in dem er mittelbar zur Steuerung des Einfügevorgangs der generierten Abtastwerte der Übergangsfunktion in die zugehörigen Speicherplätze des Durchlaufspeichers DS verwendet wird. Den Steuerimpuls für diesen Einfügevorgang erhält der Signalkorrektor SC über seinen Eingang e2.

Der Adressenumwerter AU ermittelt aus den ihm vom Abtastfrequenzzähler AZ gelieferten Angaben über die Anzahl der zu ersetzenden Abtastwerte die hierfür geeigneten im Festwertspeicher ROM gespeicherten Abtastwerte und veranlasst ihre Übergabe an den Dividierer DI. Im Dividierer werden die aus dem Festwertspeicher ROM ausgelesenen Abtastwerte durch den Betrag des Differenzwertes D6 entsprechend Diagramm d3 nach Fig. 1 dividiert und anschliessend die so gewonnenen Abtastdifferenzwerte A1', A2', A3' und A4' nach Diagramm d6 der Fig. 1 im Summenbildner SB unter Berücksichtigung der Änderungsrichtung des Signals in der richtigen Reihenfolge, ausgehend von dem Basiswert A0', zu den Abtastwerten A1'', A2'', A3'' und A4'' aufsummiert. Die gewonnenen Abtastwerte werden am Ausgang des Summenbildners SB mit Hilfe des Übergabeschalters ÜS über den Zeitkorrektor ZK hinweg in die ihnen zugeordneten Speicherplätze innerhalb des Durchlaufspeichers DS eingefügt, so dass dann am Ausgang a das störbefreite Audiosignal in Abtastwertdarstellung entsprechend dem Diagramm d7 nach Fig. 1 ansteht. Die Betätigung des Übergabeschalters ÜS erfolgt über das Signal des Fehlerdetektors FD nach Fig. 3 am Eingang e2 des Signalkorrektors SC bzw. bei vorgegebenem Schwellwert über den Schwellwertdetektor SD, das dabei über das Zeitverzögerungsglied $\Delta t1$ am Steuereingang des Übergabeschalters ÜS wirksam wird. Der Schwellwertdetektor SD ist mit anderen Worten für die Erkennung und Unterdrückung von Störpegelspitzen entsprechend Ax nach Fig. 1 zuständig. Hierfür erhält er ebenfalls den Abtastfrequenztakt, über den er in die Lage versetzt wird, festzustellen, ob die Zeit $\Delta T$ zwischen zwei aufeinanderfolgenden Polaritätswechseln bei gleichzeitigem Überschreiten der vorgegebenen Schwelle $\Delta U$ innerhalb des durch die $\Delta t$-Referenz gebildeten Zeitfensters liegt oder nicht.

In Fig. 5 ist noch zur näheren Erläuterung des Festwertspeichers ROM ein Diagramm angegeben, bei dem über der Zahl der Abtastwerte, die hier fünfzehn beträgt, die dadurch angenäherte Übergangsfunktion in Form eines Halbsinus angegeben ist. Bei der hier beispielhaft angegebenen Quantisierung dieses Halbsinus für $q = 2^4 - 1$ Quantisierungsstufen ergeben sich die fünfzehn, jeweils vier Bit aufweisenden Abtastwerte in Form von PCM-Worten aus den Binärstellen B0, B1, B3 und B4 wie angegeben. Der Adressenumwerter AU erhält an seinem Eingang X vom Abtastfrequenzzähler AZ entsprechend Fig. 1 die Information, dass die Übergangsfunktion durch drei Abtastwerte verwirklicht werden soll. Der Adressenumwerter AU ermittelt daraus drei gleichmässig über den Halbsinus verteilte Abtastwerte Q1, Q2 und Q3, die dann in Form der 4 Bit PCM-Worte S1, S2 und S3 am Ausgang Y zum Dividierer DI hin abgegeben werden. Hätte beispielsweise der Abtastfrequenzzähler AZ an den Eingang X des Adressenumwerters AU die Zahl 2 gemeldet, dann hätte der Adressenumwerter die Abtastwerte entsprechend den Nummern 5 und 11 zur Ausgabe an den Ausgang Y bestimmt.

In der Praxis werden im Hinblick auf die hohen Anforderungen Codeworte mit einer wesentlich höheren Bitzahl verwendet. Für die in Aussicht genommene digitale Speicherung von Audiosignalen ist z. B. an einen 14-Bit-Code gedacht. In Anpassung daran muss auch die im Festwertspeicher ROM gespeicherte Übergangsfunktion eine entsprechend feine Quantisierung in ihren Abtastwerten haben. Bei einem binären Code von 14 Elementen bedeutet dies, dass der Festwertspeicher ROM die Übergangsfunktion in Gestalt von 16 383 Abtastwerten enthalten muss.

Liste der wesentlichen in der Zeichnung verwendeten Bezugzeichen

s(t)      = Audiosignal
Av       = Abtastwert
Dv      = Differenzwert
sü(t)     = Übergangsfunktion
s'(t)     = störbefreites Audiosignal
Δto      = Zeitlupenintervall
ΔTo     = Zeitlupenabtastintervall
Cn       = Kanalschaltung
MT      = Magnettonband
A/W     = Aufnahme-Wiedergabegerät
T        = Takt
ZT       = zentrale Taktversorgung
W, W'   = Wandler
FD       = Fehlerdetektor
SC       = Signalkorrektor
DS       = Durchlaufspeicher
DB      = Datenbus
ADB     = Abtastwertdifferenzbildner
AZ       = Abtastfrequenzzähler
AU      = Adressenumwerter
ROM     = Festwertspeicher
DI       = Dividierer
SB       = Summenbildner
ZK       = Zeitkorrektor
PIS      = Signaländerungs-Polaritätswechsel-intervallspeicher
ADS     = Abtastwertdifferenzspeicher
Δt1, Δt2 = Zeitverzögerungsglied
SD       = Schwellwertdetektor
PD      = Polaritätsdetektor
MK      = Monostabile Kippstufe
ÜS       = Übergabeschalter
d        = Treppenfunktion

**Patentansprüche**

1. Verfahren zum Beseitigen bzw. Unterdrücken von akustischen Störsignalen bei für den Wiedergabevorgang aufzubereitenden Audioprogrammen, wie sie durch programmbezogene Pegelsprünge zwischen Signalausfällen, abrupte Übergänge, insbesondere von und zu Signalpausen, unerwünschte Signalfrequenzen und zu verbindende Schnittstellen zweier Programmabschnitte in Erscheinung treten, bei der die aufeinanderfolgenden Abtastwerte (Av) des aufzubereitenden Audiosignals (s(t)) einen Durchlaufspeicher (DS) durchlaufen, in dem durch einen Fehlerdetektor (FD) erkannte oder vorgegebene gestörte Programmabschnitte durch neue Abtastwerte entsprechend einer geeigneten Übergangsfunktion ersetzt werden, dadurch gekennzeichnet, dass ein erkannter oder vorgegebener gestörter Programmabschnitt durch einen ihm unmittelbar vorausgehenden und einen ihm unmittelbar nachfolgenden Signalwert eingegrenzt wird, der jeweils durch einen Vorzeichenwechsel der zeitlichen Änderung des aufzubereitenden Audiosignals (s(t)) (Signaländerungs-Polaritätswechsel) bestimmt wird und die so festgelegten gestörten Programmintervalle (ΔST) von angepassten Übergangssignalen (sü(t)) mit weichen Übergängen an beiden Enden ersetzt werden und dass für die Generierung der diese Übergangssignale realisierenden neuen Abtastwerte von einem eine geeignete Übergangsfunktion (d) in Gestalt von Abtastwerten enthaltenden adressierbaren Festwertspeicher (ROM) Gebrauch gemacht wird, aus dem die jeweils erforderliche Anzahl von gleichmässig über den Verlauf der Übergangsfunktion verteilten Abtastwerten (Q1, Q2, Q3) ausgelesen, entsprechend einem durch die maximale Signaländerung (D6) in ihrem Wert verringert und/oder vergrössert, in eine von der Signaländerungsrichtung abhängige Reihenfolge gebracht und in die Störsignalabschnitte anstelle der gestörten Abtastwerte (A1, A2, A3, A4) eingefügt werden.

2. Verfahren nach Anspruch 1, dadurch gekennzeichnet, dass die Übergangsfunktion (d) ein Halbsinus ist, deren Anzahl digital gespeicherter Abtastwerte (9) gleich der um einen Wert verringerten Zahl der maximal vorhandenen bzw. zu fordernden Quantisierungsstufen $(9 = 2^n - 1$ des aufzubereitenden Audiosignals (s(t)) ist.

3. Verfahren nach Anspruch 1 oder 2 zur Unterdrückung von Krach- bzw. Zischgeräuschen bei grosser Zeitdehnung des aufzubereitenden an sich ungestörten analogen oder digitalen Audiosignals, beispielsweise bei der manuellen Suche geeigneter Schnittstellen, dadurch gekennzeichnet, dass jedes zeitgedehnte Intervall zwischen zwei aufeinanderfolgenden Signalabtastwerten (Zeitlupenabtastintervall ΔTo) durch im Rhythmus der normalen Abtastfrequenz aufeinanderfolgende Abtastwerte der Übergangsfunktion (d) aufgefüllt werden.

4. Verfahren nach Anspruch 1 oder 2, dadurch gekennzeichnet, dass die den Durchlaufspeicher (DS) durchlaufenden Abtastwerte (Av) des aufzubereitenden Audiosignals (s(t)) zunächst einen die Substitution der Abtastwerte im Durchlaufspeicher mitsteuernden Fehlerdetektor (FD) passieren, dass ferner zur Ermittlung der Parameter zur Generierung der für die Substitution erforderlichen Abtastwerte (A1'', A2'', A3'', A4'') durch Auswahl und Modifikation von im Festwertspeicher (ROM) vorgegebenen Abtastwerten (Qv) der Übergangsfunktion (d) aus den in den Durchlaufspeicher nacheinander einlaufenden Abtastwerten des Audiosignals fortlaufend Differenzwerte (A(v-1)-Av) zum Feststellen von aufeinanderfolgenden Signaländerungs-Polaritätswechselintervallen mit eine eventuelle Signalstörung anzeigenden Polaritätswechseln gebildet werden und dass die für die Überfunktionsendwerte massgeblichen Abtastwerte (Av) jeweils durch die das betreffende Signaländerungs-Polaritätswechselintervall markierenden Polaritätswechsel (+/−) bestimmt sind und zwar abhängig davon, ob die

Dauer ΔT eines Signaländerungs-Polaritätsintervalls eine vorgegebene Zeitbreite (Δt-Referenz) überschreitet oder unterschreitet.

5. Verfahren nach Anspruch 4, dadurch gekennzeichnet, dass eine Störpegelspitze durch ein Signaländerungs-Polaritätsintervall erkannt wird, dessen Dauer (ΔT) die vorgegebene Zeitbreite (Δt-Referenz) unterschreitet und dass gleichzeitig die Grösse der die Polaritätswechsel dieses Signaländerungs-Polaritätswechselintervalls markierenden Differenzwerte eine vorgegebene Schwelle ($\pm \Delta U$) betragsmässig überschreiten.

6. Verfahren nach einem der vorhergehenden Ansprüche, bei dem das aufzubereitende Audioprogramm ein PCM-Signal ist, dadurch gekennzeichnet, dass die Aufbereitung ausschliesslich digital erfolgt.

7. Verfahren nach einem der Ansprüche 1 bis 4, bei dem das aufzubereitende Audioprogramm ein Analogsignal ist, dadurch gekennzeichnet, dass die Aufbereitung ausschliesslich analog erfolgt.

## Claims

1. A method of eliminating or reducing acoustic interference signals, such as appear in audio-programmes which are to be prepared for the reproduction process as a result of programme-related level jumps between signal drop-outs, in particular abrupt transitions from and to signal pauses, undesired signal frequencies, and the need to interface two programme sections, wherein the consecutive sample values (Av) of the audiosignal (s(t)) to be prepared pass through a throughput store (DS) in which disturbed programme sections recognised by an error detector (FD) or predetermined are replaced by new sample values in accordance with a suitable transition function, characterised in that a recognised or predetermined disturbed programme section is delimited by a signal value by which it is directly preceded and a signal value by which it is directly followed, each of which are determined by a sign change of the time change of the audio-signal (s(t)) to be prepared (signal-change/polarity-change), and the disturbed programme intervals (ΔST) specified in this way are replaced by matching transition signals (sü(t)) with soft transitions at both ends, and that an addressable read-only store (ROM) containing a suitable transition function (d) in the form of sample values is used to generate the new sample values which represent these transition signals; the necessary number of sample values (Q1, Q2, Q3) from this ROM uniformly distributed over the curve of the transition function, are read-out, reduced and/or increased in value in accordance with the maximum signal change (D6), brought into a sequence dependent upon the direction of the signal change, and interposed into the interference signal sections in place of the disturbed sample values (A1, A2, A3, A4).

2. A method as claimed in Claim 1, characterised in that the transition function (d) is a half-sine, whose number of (digitally) stored sample values (9) is equal to one less than the maximum number of existing or requested quantisation stages ($9 = 2^n-1$) of the audio-signal (s(t)) to be prepared.

3. A method as claimed in Claims 1 or 2 for the suppression of crackling or hissing noises when an extended-time analogue or digital audio-signal to be prepared is in itself undisturbed, for example during a manual search for suitable interfaces, characterised in that each time-extended interval between two consecutive signal sample values (slow-motion sampling interval ΔTo) is filled by sample values of the transition function (d) which follow one another in the timing of the normal sampling frequency.

4. A method as claimed in Claims 1 or 2, characterised in that the sample values (Av) of the audio-signal (s(t)) to be prepared which pass through the throughput store (DS), firstly pass through an error detector (FD) which cooperates in controlling the substitution of the sample values in the throughput store, that moveover in order to determine the parameters for the generation of the sample values (A1″, A2″, A3″, A4″) required for the substitution, by the selection and modification of sample values (Qv), of the transition function (d) preset in the read-only store (ROM) from the sample values of the audio-signal consecutively input into the throughput store, difference values (A(v − 1)-Av) are continuously formed to establish consecutive signal-change/polarity-change intervals with polarity changes which indicate a possible signal disturbance, and that the sample values (Av) which govern the transition function end values are each determined by the polarity changes (+ / −) which mark the signal-change/polarity-change interval in question, irrespectively of whether the duration AT of a signal-change/polarity-interval overshoots or undershoots a given time (Δt-reference).

5. A method as claimed in Claim 4, characterised in that an interference level peak is recognised by a signal-change/polarity-interval whose duration (ΔT) undershoots the given time (Δt-reference), and that simultaneously the magnitude of the difference values which mark the polarity change of this signal-change/polarity-change interval overshoot a given threshold ($\pm \Delta U$).

6. A method as claimed in one of the preceding Claims, in which the audio-programme to be prepared consists of a PCM-signal, characterised in that the preparation takes place exclusively in digital fashion.

7. A method as claimed in one of Claims 1 to 4, wherein the audio-programme to be prepared consists of an analogue signal, characterised in that the preparation takes place exclusively in analogue fashion.

## Revendications

1. Procédé pour éliminer ou supprimer des signaux acoustiques parasites se présentant dans des programmes audio devant être préparés pour l'opération de lecture, et du type apparaissant par suite de variations brusques de niveau liées aux programmes, entre des défaillances de signaux, des transitions brusques, notamment lors du début et de la fin de pauses entre les signaux, des fréquences indésirables de signaux et des points de jonction devant être réunis de deux séquences de programme, et selon lequel les valeurs d'exploration successives (Av) du signal audio (s(t)) devant être préparé traversent une mémoire à circulation (DS), dans laquelle des séquences perturbées de programme identifiées par un détecteur d'erreurs (FD) ou prédéterminées sont remplacées par de nouvelles valeurs d'exploration conformément à une fonction de transition appropriée, caractérisé par le fait qu'une séquence de programme perturbée identifiée ou prédéterminée est délimitée par une valeur de signal située directement en amont d'elle et par une valeur de signal située directement en aval d'elle, valeurs qui sont déterminées respectivement par un changement de signe de la modification dans le temps du signal audio (s(t)) devant être préparé (changement de polarité de la modification du signal), et les intervalles de programme ($\Delta ST$) perturbés ainsi déterminés sont remplacés par des signaux de transition adaptés (sü(t)) comportant des transitions douces à leurs deux extrémités, et que pour la production des nouvelles valeurs d'exploration réalisant ces signaux de transition on utilise une mémoire morte adressable (ROM) contenant une fonction appropriée de jonction (d) sous la forme de valeurs d'exploration et à partir de laquelle le nombre respectif nécessaire de valeurs d'exploration (Q1, Q2, Q3) réparties uniformément sur la courbe de variation de la fonction de transition, sont lues, ces valeurs sont réduites et/ou accrues conformément à un facteur prédéterminé par la modification de signal maximum (D6) pendant la séquence du signal parasite, sont disposées sous la forme d'une suite dépendant du sens de la modification du signal et sont insérées dans les séquences du signal parasite à la place des valeurs d'exploration (A1, A2, A3, A4) perturbées.

2. Procédé suivant la revendication 1, caractérisé par le fait que la fonction de transition (d) est une demi-sinusoïde, dont le nombre des valeurs d'exploration (q) mémorisées (sous forme numérique) est égal au nombre, réduit d'une valeur, des échelons de quantification ($q = 2^n - 1$) présents ou devant être obtenus au maximum, du signal audio (s(t)) devant être préparé.

3. Procédé suivant la revendication 1 ou 2 servant à supprimer des bruits de grésillements et de sifflements dans le cas d'une dilatation importante du temps du signal audio analogique ou numérique devant être préparé et qui est en soi parasite, par exemple dans le cas de la recherche manuelle de points de jonction appropriées, caractérisé par le fait que chaque intervalle dilaté dans le temps entre deux valeurs d'exploration de signal successives (intervalle d'exploration dans le mode ralenti $\Delta$To) est rempli par des valeurs d'exploration de la fonction de transition (d), se succédant au rythme de la fréquence normale d'exploration.

4. Procédé suivant la revendication 1 ou 2, caractérisé par le fait que les valeurs d'exploration (Av), circulant dans la mémoire à circulation (DS), du signal audio (s(t)) devant être préparé traverse tout d'abord un détecteur d'erreurs (FD), commandant simultanément la substitution des valeurs d'exploration dans la mémoire à circulation, qu'en outre, pour la détermination des paramètres servant à produire les valeurs d'exploration (A1″, A2″, A3″, A4″) nécessaires pour la substitution, on forme de façon continue, par sélection et modification de valeurs d'exploration (Qv), prédéterminées dans la mémoire morte (ROM), de la fonction de transition (d) et à partir des valeurs d'exploration du signal audio, pénétrant successivement dans la mémoire à circulation, des valeurs de différence (A(v − 1)-Av) servant à déterminer des intervalles successifs de changement de polarité de modification de signal avec des changements de polarité indiquant un éventuel parasitage du signal, et que les valeurs d'exploration (Av), qui sont déterminantes pour les valeurs finales de la fonction de transition, sont déterminées respectivement par le changement de polarité ($+/-$) marquant l'intervalle considéré de changement de polarité de la modification de signal, et ce en fonction du fait que la durée ($\Delta T$) d'un intervalle de changement de polarité de la modification de signal dépasse par le haut ou par le bas une durée prédéterminée (référence $\Delta t$).

5. Procédé suivant la revendication 4, caractérisé par le fait qu'on identifie un maximum du niveau de parasitage au moyen d'un intervalle de changement de polarité de modification de signal, dont la durée ($\Delta T$) tombe au-dessous de la durée prédéterminée (référence ($\Delta t$) et que simultanément la grandeur des valeurs de différence, qui marque le changement de polarité de cet intervalle de changement de polarité de modification de signal, dépasse un seuil prédéterminé ($+ \Delta U$).

6. Procédé suivant l'une des revendications précédentes, selon lequel le programme audio devant être préparé est un signal MIC, caractérisé par le fait que la préparation s'effectue exclusivement sous forme numérique.

7. Procédé suivant l'une des revendications 1 à 4, selon lequel le programme audio devant être préparé est un signal analogique, caractérisé par le fait que la préparation est réalisée exclusivement sous forme analogique.

FIG 1

FIG 2

A3
A4
A1
A2

s(t)

d_1)

Δto

t →

A1    sü1(t)
A2

sü2(t)

d_2)

ΔTo

A3    sü3(t)    A4

12xΔto

FIG 3

C1

MT    W    FD    e1    SC    q    W    A/W
              q1
              e2

C2

T

Cn

ZT

**FIG 4**

**FIG 5**